# EUROPEAN PATENT APPLICATION

(11) **EP 4 667 711 A1**
(43) Date of publication of application: **24.12.2025**
(21) Application number: 25184049.2
(22) Date of filing: 19.06.2025
(51) Int. Cl.: F01D 25/00, B08B 3/02, B64F 5/00, F04D 29/70, F01D 25/28

(54) **SPRAY NOZZLE FOR CLEANING AN AUXILIARY POWER UNIT (APU)**

(30) Priority: 21.06.2024 IN 202411047960
(71) Applicant: PRATT & WHITNEY CANADA CORP., Longueuil, Québec J4G 1A1 (CA)
(72) Inventor: THOMAS, Ajit, (01BE5) Longueuil, J4G 1A1 (CA)
(74) Representative: Dehns

(57) **Abstract**

An auxiliary power unit (10) includes an air inlet housing (26); a compressor (12; 56) arranged to receive air from the air inlet housing (26); and a spray nozzle positioned within the air inlet housing (26) oriented to spray a cleaning fluid directly at the compressor (12; 56), the spray nozzle having a connection for connecting to a source of cleaning fluid.

## Description

### FIELD

The present disclosure relates to auxiliary power units (APUs) and, more particularly, to a system and method for cleaning an APU.

### BACKGROUND

Auxiliary power units, or APUs, are used to provide pneumatic and/or electrical power to one or more components of an aircraft in lieu of or to supplement that generated by the main engine(s). APUs are frequently mounted in areas in an aircraft that are difficult to reach. For this and other reasons, it is not routine nor is it easy to clean an APU.

Aircraft with APUs often operate in salty, sandy and polluted environments, which is a difficult setting when no APU cleaning procedures are present. Similarly, when operating during the winter and in icing conditions, the aircraft may receive an anti-ice spray, which consists of a corrosive liquid that may be ingested into the compressor of an APU, which may reduce the life of the compressor.

### SUMMARY OF THE DISCLOSURE

In one aspect, there is provided an auxiliary power unit that comprises an air inlet housing; a compressor arranged to receive air from the air inlet housing; and a spray nozzle positioned within the air inlet housing oriented to spray a cleaning fluid directly at the compressor, the spray nozzle having a connection for connecting to a source of cleaning fluid.

In a non-limiting configuration, the compressor comprises a first compressor and a second compressor spaced axially from the first compressor, and wherein the spray nozzle is positioned between the first compressor and the second compressor to axially spray the cleaning fluid directly at the first compressor and the second compressor.

In another non-limiting configuration, the spray nozzle comprises a ring mounted within the air inlet housing and having at least one wash nozzle extending from the ring and directed toward the compressor.

In still another non-limiting configuration, the at least one wash nozzle is directed at an impeller of the compressor.

In a further non-limiting configuration, the at least one wash nozzle comprises a plurality of wash nozzles extending from the ring and configured to direct flow toward the compressor.

In a still further non-limiting configuration, the ring comprises a T connection with two ring segments extending from the T connection in opposite circumferential directions around an inner surface of the air inlet housing.

In another non-limiting configuration, the T connection is located at a 6-o-clock position on the air inlet housing.

In still another non-limiting configuration, the two ring segments extend around the inner surface of the air inlet housing to respective segments ends that define a gap there between.

In a further non-limiting configuration, the compressor has an impeller and an impeller housing, wherein the impeller housing has a radially outwardly extending lip, and wherein the spray nozzle is positioned to spray wash fluid past the lip to the impeller.

In a still further non-limiting configuration, the compressor has an impeller and an impeller housing having an impeller shroud, and wherein the spray nozzle is positioned to spray wash fluid through the impeller shroud.

In another non-limiting configuration, the auxiliary power unit further comprises a reservoir positioned to catch wash fluid exiting the compressor.

In still another non-limiting configuration, the auxiliary power further comprises a compressor housing having a drain plug positioned at a 6-o-clock position on the compressor housing.

In a further non-limiting configuration, the auxiliary power unit further comprises a butterfly valve associated with the spray nozzle to control flow of the cleaning fluid to the auxiliary power unit.

In a still further non-limiting configuration, the auxiliary power unit further comprises a control unit for controlling opening of the butterfly valve, wherein the control unit is configured to first partially open the butterfly valve for flow that clears debris, and then to open fully for maximum spray.

In another aspect, there is provided a method for cleaning an auxiliary power unit that comprises feeding a washing fluid to a spray nozzle positioned within an air inlet housing of a compressor, the spray nozzle being oriented to spray the washing cleaning fluid directly at the compressor, whereby the washing fluid contacts and cleans the compressor.

In a non-limiting configuration, the method further comprises connecting the spray nozzle to a source of washing fluid before the feeding step.

In another non-limiting configuration, the method further comprises collecting wash fluid after contacting the compressor in a reservoir.

In still another non-limiting configuration, the collecting step comprises opening a drain plug in a housing of the compressor and collecting used washing fluid as it leaves the drain plug.

In a further non-limiting configuration, the feeding step comprises feeding step comprises first feeding the cleaning fluid to the spray nozzle, and then flushing the cleaning fluid with water.

In a still further non-limiting configuration, a combustor downstream of the compressor has a fuel supply and an ignitor, and a switch for operating the fuel supply and the ignitor, and the method further comprises disconnecting at least one of the ignitor and the fuel supply before the feeding step.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 is a sectional schematic view of an auxiliary power unit as disclosed herein;
FIG. 2 is a perspective view of an air inlet housing for an APU; and
FIG. 3 is a view taken along the lines 3-3 of FIG. 2.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

This disclosure relates to auxiliary power units and to a system and method for cleaning the auxiliary power unit (APU), especially the compressor and related components of the APU. As set forth above, APUs are frequently operated under circumstances where they are expose to sand, salt and other forms of pollution, and also are sometimes exposed to harsh chemicals such as anti-icing liquids which can further damage the compressor of the APU and therefore shorten the useful lifetime of the compressor or even the entire APU.

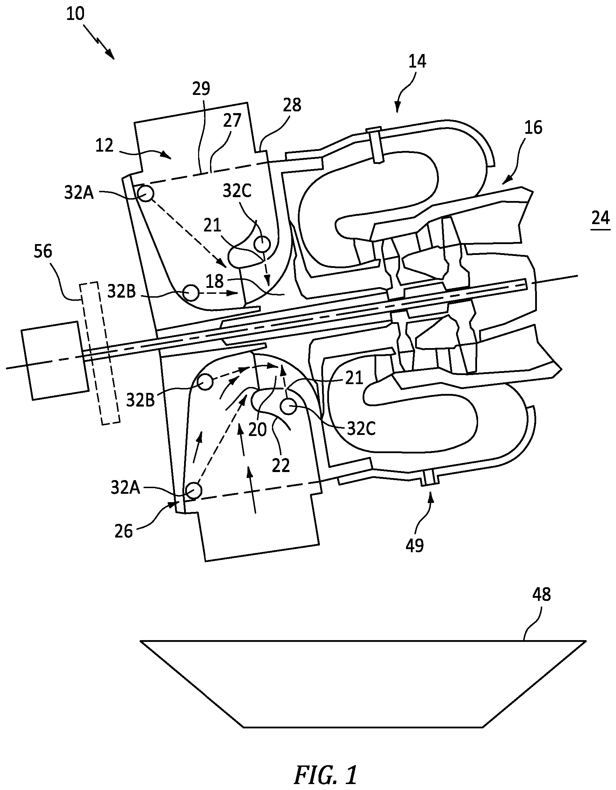

FIG. 1 shows a sectional and schematic view of an APU 10. The basic components as shown in FIG. 1 are a compressor section 12 followed by a combustor section 14 and a turbine section 16. Compressor section 12 has a compressor impeller 18 mounted within an impeller shroud 20 having an opening lip 22. During operation, air enters compressor section 12 and is joined with fuel in combustor section 14. Resulting hot gas flows to turbine section 16 as desired and then to an engine exhaust 24. During operation, the APU 10 can ingest a wide variety of debris or other material that is potentially harmful to the APU 10. This can include sand, dust, pollution and even potentially harmful or corrosive chemicals used in other aspects of operation of components related to the APU, for example including anti-icing chemicals used on the aircraft carrying the APU. APU has an air inlet plenum 26 through which air flows to and through APU as outlined above. Thus, air inlet plenum 26 feeds air to axial and/or radial interaction with compressor impeller 18.

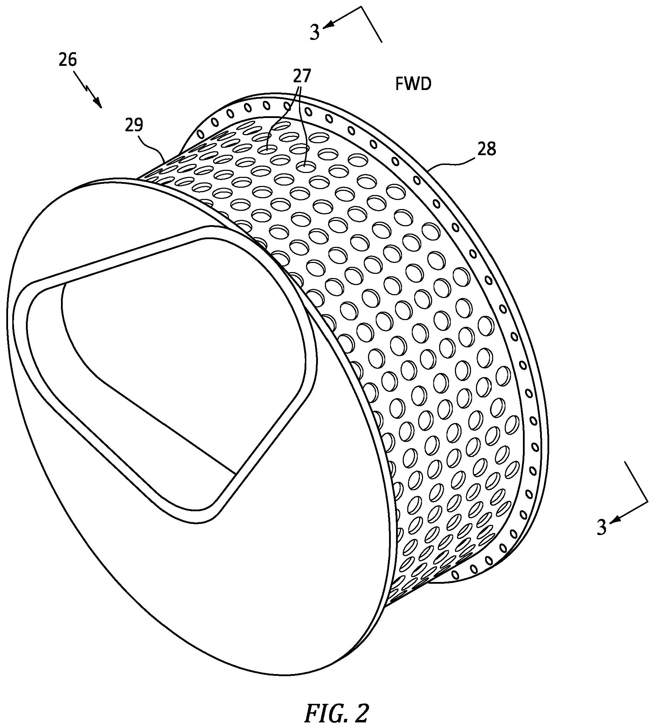

Considering also the illustration of FIG. 2, air inlet plenum or housing 26 is further illustrated. As shown, housing 26 is a generally cylindrical structure having a flange connection 28 for adjacent components. The wall of housing 26 has an array of perforations 27 in cylindrical wall 29 to allow air to enter an interior of inlet plenum or housing 26. Considering FIGS. 1 and 2 together, the flow of air through housing 26 can be seen (arrows in FIG. 1) flowing around and past lip 22 of compressor shroud 20 to interact with impeller 18.

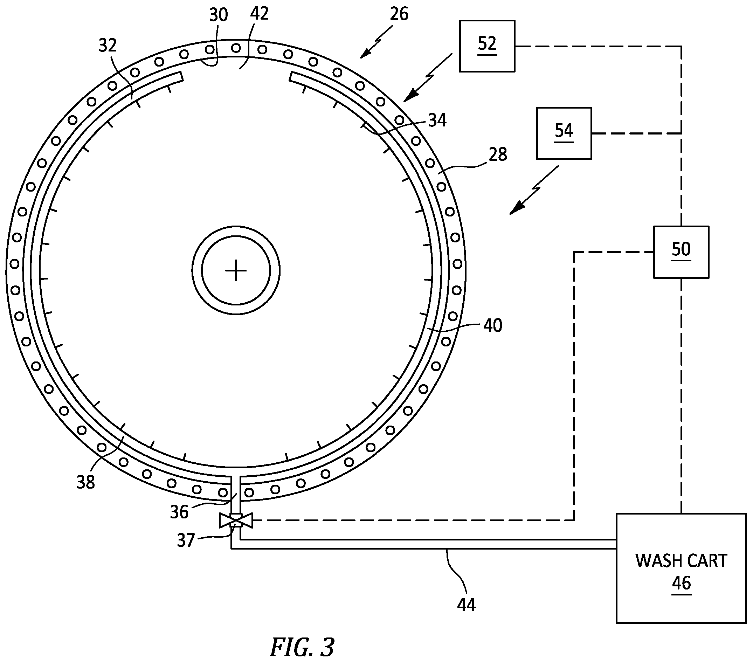

Now considering also FIG. 3, this view is taken along the lines 3-3 of FIG. 2. FIG. 3 shows an inner wall 30 of housing 26, which can be cylindrical wall 29 or another inner wall structure of housing 26, and a wash ring 32 positioned within housing 26. Wash ring 32 has one or more nozzles 34 arranged to direct a washing or cleaning fluid toward impeller 18. Referring also to FIG. 1, a number of different possible locations are possible for wash ring. Three possible positions are indicated in FIG. 1 at 32A, 32B and 32C. Wash ring 32 at position 32A corresponds to the ring 32 as shown in FIG. 3. From this position 32A, wash fluid can be sprayed radially inwardly with an axial component to direct wash fluid past lip 22 and into contact with impeller 18 as desired. This is illustrated by the flow arrows from position 32A. A wash ring 32 at position 32B is more radially inwardly located than at position 32A. From this position, a shorter and more axial path for spray of wash fluid can be implemented, also as shown by the arrows from position 32B. Further, a wash ring 32 at position 32C can be implemented to spray wash fluid radially inwardly through a small gap 21 in shroud 20 to interact with impeller 18. It should be appreciated that wash rings can be positioned at any one or more of these locations, and at other locations as well, all within the broad scope of this disclosure.

Referring back to FIG. 3, Wash ring 32 in this configuration has a T-connection 36 that extends radially out of housing 26 for connection to a source of wash or cleaning fluid. This T-connection can be positioned as shown at approximately the 6PM position on housing 26. This position can be beneficial as this can be the most easily accessed position on housing 26 when APU 10 is on-wing (e.g., mounted in an airframe). Also as shown, ring 32 can have two sections 38, 40 extending from T-connection 36 in opposite directions around a portion of inner surface 30 of housing 26. Sections 38, 40 do not connect in this configuration, but rather have a small gap 42 between ends thereof.

As mentioned above, ring 32 can have one or more nozzles 34 positioned to spray washing fluid into direct contact with parts of the compressor, specifically to contact impeller 18 of the compressor. Nozzles can be arranged to produce a spray of washing fluid in any one or more of the directions indicated in FIG. 1. When arranged at position 32A, spray from the nozzles is directed past lip 22 and into direct contact with impeller 18. When arranged at position 32B, spray from nozzles is directed more axially toward impeller 18. When arranged at position 32C, spray passes through the impeller shroud and into contact with impeller 18. FIG. 3 shows a plurality of nozzles 34 arranged around substantially the entire inner periphery of housing 26 and in this way a good contact of wash fluid with impeller 18 can be accomplished. It should be appreciated, however, that even with just a single nozzle, good washing contact can be obtained.

The configuration shown herein, where ring 32 is positioned within housing 26, is advantageous because ring 32 itself is protected from fouling or blocking by being within housing 26. This helps to ensure that the washing system is operative when needed.

FIG. 3 shows a main hose 44 connected between a wash cart 46 and T-connection 36. With this configuration, wash cart 46 can be transported to location of the APU and connection made through main hose 44 to supply the needed washing or cleaning fluid. Alternatively, T-connection can be connected to an internal supply of washing or cleaning fluid located onboard the aircraft.

A butterfly valve 37 can be positioned at an inlet to wash ring 32. Butterfly valve 37 can be upstream or downstream of the connection to line 44, or could be part of the connection to line 44. Butterfly valve 37 can be configured for slow opening when wash ring 32 is to be employed, for example to clear dirt or debris, after which the butterfly valve 37 can be fully opened for a full or maximum spray. Operation of butterfly valve 37 can be manual or automated.

Returning to FIG. 1, a reservoir 48 is schematically illustrated for collecting washing or cleaning fluid after it has been used to clean the compressor. Further, combustor 14 can have a housing drain plug 49 positioned to drain washing or cleaning fluid from within the combustor. In the system as shown, such fluid can be drained through drain plug 49 into reservoir 48 for collection and recycling or reuse as desired.

It will be appreciated that the wash ring with flow nozzles as disclosed herein, mounted within the compressor air inlet housing as shown in any one or more of positions 32A, 32B and 32C, arranges the nozzles to facilitate compressor washes, thus improving the performance and the durability of the APU.

Nozzles arranged in these locations may have a direct line of sight to the compressor or impeller blades, which is desirable. Nozzles arranged at position 32C may also be installed on the compressor shroud to access the compressor blades.

Further, although the nozzles as disclosed herein are shown in a simple ring shape or configuration, other positions and configurations of nozzles can be used as well, all within the scope of the present disclosure.

The washing fluid may be supplied to the nozzles using a single or multiple segmented manifolds, in this case two segments 38, 40 are illustrated. Further, suitable examples of washing fluid include but are not limited to water, soapy water and other fluid including cleaners and degreasers and the like. Further, different fluids can be used sequentially in order to facilitate a good cleaning of impeller 18 as desired. For example, washing can be started by spraying a non-water cleaning fluid for a certain period of time, and then followed by rinsing with water.

Washing can be conducted when the compressor is completely powered down. Alternatively, washing can be conducted when running at slow speed to help distribute the cleaning fluid through the compressor and downstream components. A further embodiment can be done during dry motoring, which is when the compressor is operated without fuel. To facilitate this mode of operation, a control 50 can be communicated and operatively associated with an ignitor 52 and source of fuel 54 for a combustor in combustor section 14 (FIG. 1), both schematically illustrated, in order to disconnect fuel and the ignitor before operating wash cart 46 to feed wash fluid through butterfly valve 37 and into wash ring 32 as desired. Control 50 in this configuration would be at least one processor with suitable software or command routines to operate each of ignitor 52, fuel source 54 and the fluid pump or feed of wash cart 46.

In another configuration, it is also possible to have control 50 operate butterfly valve 37 for example to implement the staged opening as described above.

The components for such configuration and operative association of control 50 with the other components of the disclosed system are well known to persons skilled in the art.

In addition, suitable cleaning is best accomplished when fluid is supplied to nozzles under sufficient pressure, for example a pressure of between 60 to 82 psi (413-565 kPa).

Returning to FIG. 1, another non-limiting configuration can include a second compressor, in this case schematically illustrated at 56. This additional compressor can be axially spaced from the first compressor, and wash rings 32, especially at positions 32A and 32B, can be configured with nozzles configured to spray wash fluid in both axial directions so as to clean both the compressor in section 12 and the additional compressor 56. In this configuration, a common duct could be used to feed wash fluid in both directions. In addition, in this or in other configurations, multiple wash rings 32 can be positioned at the same axial position to facilitate creating streams of washing fluids in multiple directions, for example to impeller 18 and also components of upstream compressor 56.

The washing fluid may be supplied from an onboard utility or a wash cart on the ground/sky-jack as discussed above. Further, the interface between the supply nozzle manifold or T-connection and wash-cart supply line may be located anywhere close to the APU inside the aircraft loft line, or any other convenient location.

In connection with the steps of the method disclosed herein, the first step of using the wash ring as disclosed herein can be to connecting the spray nozzle, for example at T connection 36, to a source of washing fluid such as wash cart 46, before the step of feeding the washing fluid.

It will be appreciated that during or after washing, the wash fluid can be collected in reservoir 48, which can be implemented by opening a drain plug 49 (FIG. 1).

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. An auxiliary power unit (10), comprising:
an air inlet housing (26);
a compressor (12; 56) arranged to receive air from the air inlet housing (26); and
a spray nozzle positioned within the air inlet housing (26) oriented to spray a cleaning fluid directly at the compressor (12; 56), the spray nozzle having a connection (44) for connecting to a source of cleaning fluid (46).

2. The auxiliary power unit of claim 1, wherein the compressor (12) comprises a first compressor (12) and a second compressor (56) spaced axially from the first compressor (12), and wherein the spray nozzle is positioned between the first compressor (12) and the second compressor (56) to axially spray the cleaning fluid directly at the first compressor (12) and the second compressor (56).

3. The auxiliary power unit of claim 1 or 2, wherein the spray nozzle comprises a ring (32) mounted within the air inlet housing (26) and having at least one wash nozzle (34) extending from the ring (32) and directed toward the compressor (12; 56).

4. The auxiliary power unit of claim 3, wherein the at least one wash nozzle (34) is directed at an impeller (18) of the compressor (12; 56); and/or wherein the at least one wash nozzle (34) comprises a plurality of wash nozzles (34) extending from the ring (32) and configured to direct flow toward the compressor (12; 56).

5. The auxiliary power unit of claim 3 or 4, wherein the ring (32) comprises a T connection (36) with two ring segments (38, 40) extending from the T connection (36) in opposite circumferential directions around an inner surface (30) of the air inlet housing (26).

6. The auxiliary power unit of claim 5, wherein the T connection (36) is located at a 6-o-clock position on the air inlet housing (26).

7. The auxiliary power unit of claim 5 or 6, wherein the two ring segments (38, 40) extend around the inner surface (30) of the air inlet housing (26) to respective segments ends that define a gap (42) therebetween.

8. The auxiliary power unit of any preceding claim, wherein:
the compressor (12; 56) has an or the impeller (18) and an impeller housing, wherein the impeller housing has a radially outwardly extending lip (22), and wherein the spray nozzle is positioned to spray wash fluid past the lip (22) to the impeller (18); or
the compressor (12; 56) has an or the impeller (18) and an impeller housing having an impeller shroud (20), and wherein the spray nozzle is positioned to spray wash fluid through the impeller shroud (20).

9. The auxiliary power unit of any preceding claim, further comprising a reservoir (48) positioned to catch wash fluid exiting the compressor (12; 56), and optionally further comprising a compressor housing having a drain plug (49) positioned at a 6-o-clock position on the compressor housing.

10. The auxiliary power unit of any preceding claim, further comprising a butterfly valve (37) associated with the spray nozzle to control flow of the cleaning fluid to the auxiliary power unit (10), and optionally further comprising a control unit (50) for controlling opening of the butterfly valve (37), wherein the control unit (50) is configured to first partially open the butterfly valve (37) for flow that clears debris, and then to open fully for maximum spray.

11. A method for cleaning an auxiliary power unit (10), comprising the steps of:
feeding a washing fluid to a spray nozzle positioned within an air inlet housing (26) of a compressor (12; 56), the spray nozzle being oriented to spray the washing cleaning fluid directly at the compressor (12; 56), whereby the washing fluid contacts and cleans the compressor (12; 56).

12. The method of claim 11, further comprising connecting the spray nozzle to a source of washing fluid (46) before the feeding step.

13. The method of claim 11 or 12, further comprising collecting wash fluid after contacting the compressor in a reservoir (48), optionally wherein the collecting step comprises opening a drain plug (49) in a housing of the compressor (12; 56) and collecting used washing fluid as it leaves the drain plug (49).

14. The method of any of claims 11 to 13, wherein the feeding step comprises first feeding the cleaning fluid to the spray nozzle, and then flushing the cleaning fluid with water.

15. The method of any of claims 11 to 14, wherein a combustor (14) downstream of the compressor (12; 56) has a fuel supply (54) and an ignitor (52), and a switch for operating the fuel supply (54) and the ignitor (52), and wherein the method further comprises disconnecting at least one of the ignitor (52) and the fuel supply (54) before the feeding step.
